(19) Europäisches Patentamt
European Patent Office
Office européen des brevets

(11) **EP 1 845 403 B1**

(12) **FASCICULE DE BREVET EUROPEEN**

(45) Date de publication et mention de la délivrance du brevet:
**07.07.2010 Bulletin 2010/27**

(51) Int Cl.:
***G02B 27/64*** *(2006.01)*     *G01C 21/18* *(2006.01)*

(21) Numéro de dépôt: **07106086.7**

(22) Date de dépôt: **12.04.2007**

(54) **Système et procédé de stabilisation d'une ligne de visée**

System und Verfahren zur Stabilisierung einer Visierlinie

System and method of stabilising a line of sight

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **13.04.2006 FR 0603274**

(43) Date de publication de la demande:
**17.10.2007 Bulletin 2007/42**

(73) Titulaire: **SAGEM DEFENSE SECURITE**
**75015 Paris (FR)**

(72) Inventeurs:
• **Kling, Emmanuel**
**27 rue Leblanc**
**75015 Paris (FR)**

• **Quadrat, Arnaud**
**27 rue Leblanc**
**75015 Paris (FR)**

(74) Mandataire: **Le Forestier, Eric**
**Cabinet Régimbeau**
**20, rue de Chazelles**
**75847 Paris Cedex 17 (FR)**

(56) Documents cités:
**US-A- 3 139 246**     **US-A- 4 315 610**
**US-A- 4 626 063**     **US-A- 4 881 800**
**US-A- 5 444 509**

**Description**

DOMAINE TECHNIQUE GENERAL

L'invention concerne un système de stabilisation de la ligne de visée d'un dispositif optronique. Il comporte des moyens de mesure et de génération d'une compensation de la déstabilisation de la ligne de visée. Le signal de compensation est fonction de la déstabilisation harmonique mesurée.

L'invention concerne également un procédé de mise en oeuvre du système.

ETAT DE L'ART

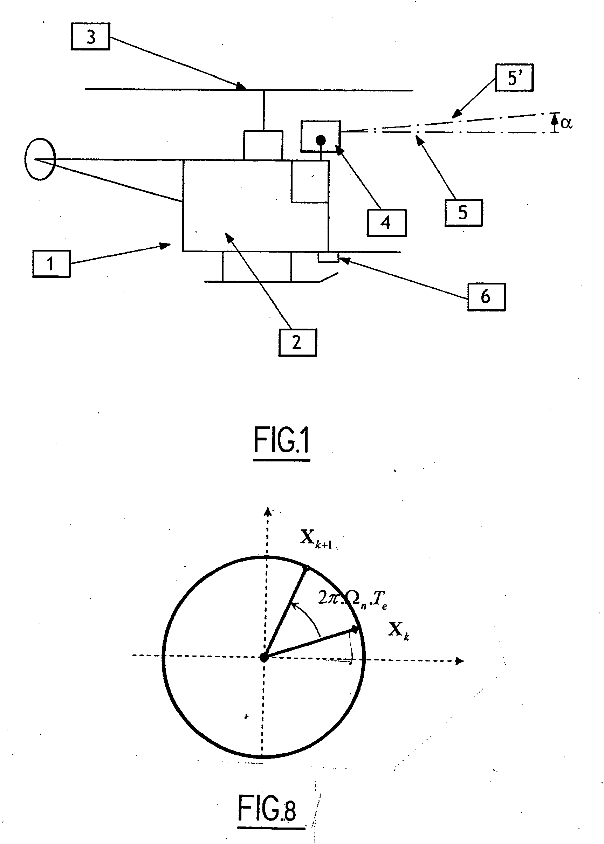

La figure 1 représente schématiquement un aéronef 1 connu, du type hélicoptère ou drone par exemple, qui comporte un corps 2 sur lequel des pales 3 sont en rotation.

L'aéronef 1 comporte un dispositif optronique de visée 4 orientant et stabilisant une ligne de visée 5. Le dispositif optronique 4 peut présenter des lignes de visées visibles et/ou infrarouge et/ou laser. Le dispositif optronique 4 est éventuellement relié à un poste de tir 6.

L'aéronef 1 est soumis à des perturbations aléatoires (dues par exemple au vent) et à des perturbations déterministes (dues par exemple à la rotation des pales 3). De ce fait, le dispositif optronique de visée 4 est situé dans un environnement vibratoire. La déstabilisation induite sur la ligne de visée se traduit par un déplacement angulaire $\alpha$, à la fréquence des perturbations, entre deux positions 5 et 5' de la ligne de visée. Une telle déstabilisation provoque un flou lors de l'acquisition des images et réduit donc les performances du dispositif optronique 4 considéré.

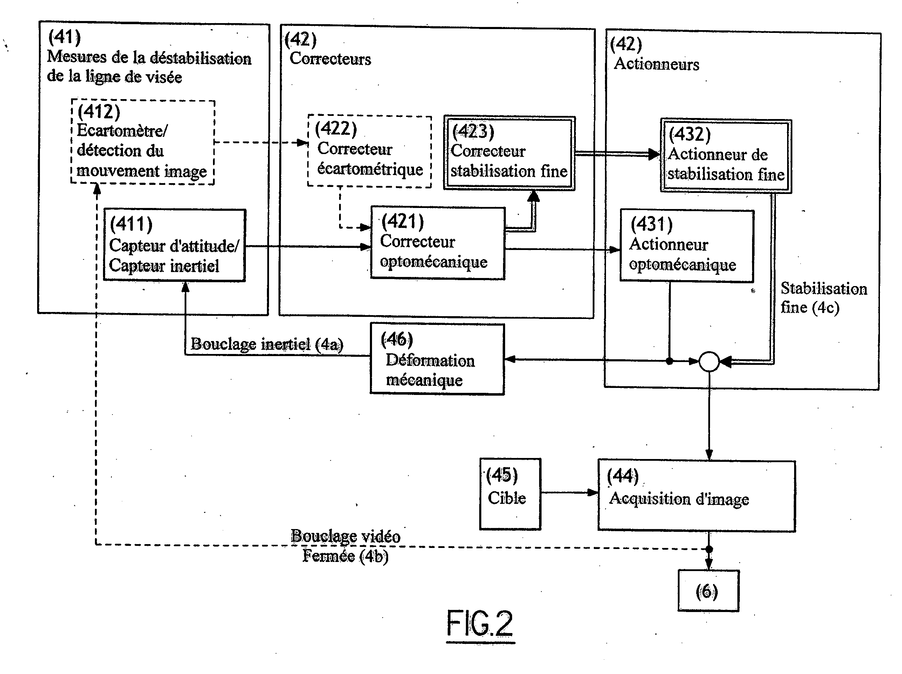

La figure 2 montre un exemple classique d'un système de stabilisation de la ligne de visée du dispositif 4.

Le système comporte des moyens d'acquisition 44 pour l'acquisition d'images (caméras, télémètres, désignateurs ou illuminateurs LASER) à asservir en position et à stabiliser.

Le système comporte des moyens de mesure 41 aptes à mesurer la déstabilisation de la ligne de visée 5, 5'. En général, les moyens de mesure 41 comportent un capteur d'attitude et/ou un capteur inertiel, notés 411. Classiquement, un écartomètre 412 permet de plus de mesurer le déplacement d'une cible 45 dans une image.

Le système comporte aussi des correcteurs 42 aptes à générer un signal de compensation de la déstabilisation. Le signal de compensation est fonction de la déstabilisation mesurée. Classiquement, le correcteur principal du dispositif 4 est le correcteur opto-mécanique 421 qui commande un actionneur optomécanique 431 et permet ainsi de réaliser un bouclage inertiel 4a. Il est cependant possible que le correcteur optomécanique 421 reçoive des consignes d'un correcteur écartométrique 422 et ainsi de réaliser un bouclage vidéo 4b qui va poursuivre les mouvements de la cible 45.

Indépendamment du correcteur écartométrique 422, il est possible d'avoir un correcteur de stabilisation fine 423 pour corriger dans l'image l'erreur résiduelle du bouclage inertiel 4a.

En général, les moyens de stabilisation sont opto-mécaniques. L'actionneur optomécanique 431 et le capteur d'attitude 411 sont mécaniquement solidaires, de sorte que le déplacement de l'actionneur optomécanique 431 peut être mesuré par le capteur d'attitude 411.

Par contre, l'actionneur de stabilisation fine 432 n'est pas mécaniquement solidaire du capteur d'attitude 411 et il existe au moins un degré de liberté entre les deux. L'actionneur de stabilisation fine 432 comporte des moyens de déplacement précis de la ligne de visée par rapport au capteur d'attitude 411 : c'est la stabilisation fine de la ligne de visée 4c. L'actionneur de stabilisation fine 432 se présente généralement sous la forme d'un miroir (ou lame à faces parallèles) situé physiquement entre un hublot du système et les moyens d'acquisition d'images 44.

L'actionneur de stabilisation fine 432 récupère le signal de compensation issu du capteur d'attitude 411, via les correcteurs 421 et 423. L'actionneur de stabilisation fine 432 stabilise la ligne de visée, en se déplaçant en opposition de phase avec la déstabilisation.

Les traits pointillés du bouclage vidéo 4b indiquent que les moyens d'acquisition d'images 44, d'écartométrie 412 et le correcteur écartométrique 422 peuvent être solidaires entre eux, pour que le système forme une boucle vidéo fermée de stabilisation 4b, ou être désolidarisés, pour que le système forme une boucle vidéo ouverte.

Le système selon la figure 2 comporte cependant des inconvénients.

Le bouclage inertiel 4a possède notamment une bande passante limitée (inférieure à la centaine de hertz) et ne permet pas d'obtenir la stabilisation très fine de la ligne de visée.

L'utilisation de la stabilisation fine 4c permet une amélioration des performances, mais elle reste très sensible au déphasage, ce qui demande en pratique de grandes bandes passantes pour l'actionneur de stabilisation fine 432. De plus les déformations mécaniques 46, entre le capteur d'attitude 411 et l'actionneur optomécanique 431 ne sont pas compensées.

Le bouclage vidéo 4b permet de compenser les imperfections du capteur d'attitude 411, mais la bande passante du bouclage vidéo 4b est limitée à quelques hertz par la prise d'images. Elle ne permet pas d'augmenter la portée du dispositif de visée.

US-A-5 444 509 divulgue un dispositif selon le préambule de la revendication 1. Le dispositif n'utilise pas la connaissance a priori de la fréquence et/ou du comportement de la fréquence dans le temps, mais dérive au moins une fois la déstabilisation pour générer un signal de compensation, ce qui a pour inconvénient d'augmenter notamment les vibrations à hautes fréquences.

PRESENTATION DE L'INVENTION

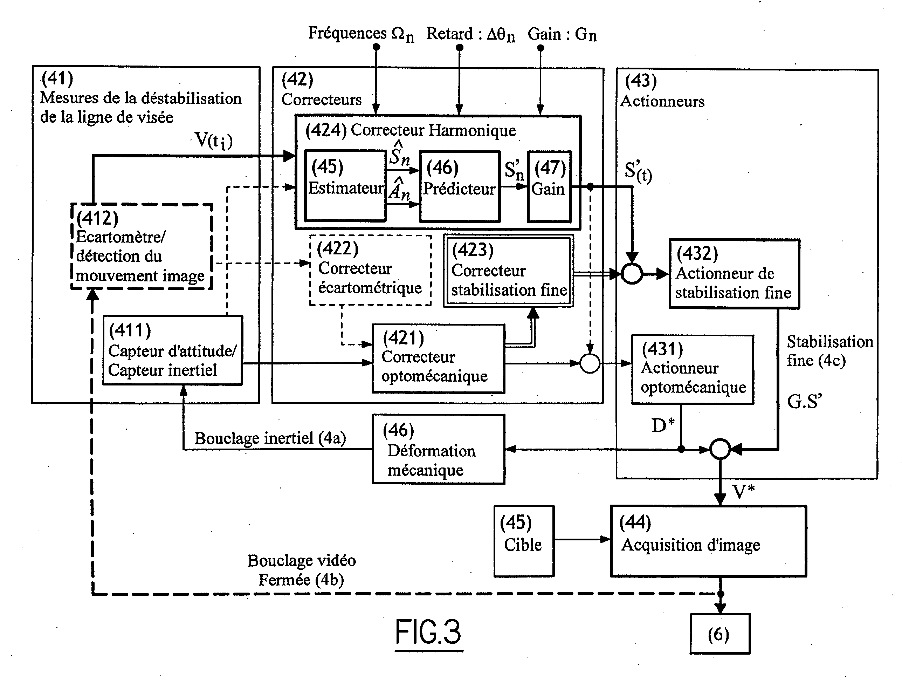

L'invention propose de pallier au moins un des inconvénients de l'art antérieur.
On propose ainsi selon l'invention un système de stabilisation accordée selon la revendication 1.
L'invention est avantageusement complétée par les caractéristiques des revendications 2 à 18.
L'invention concerne également un procédé de stabilisation d'une ligne de visée mise en oeuvre sur un tel système.
L'invention appelée stabilisation accordée, est par exemple présentée à la figure 3.
La stabilisation accordée est une amélioration du schéma classique de la figure 2, en introduisant un correcteur harmonique 424 avec l'actionneur de la stabilisation 43 et un éventuel écartomètre 412 par exemple utilisé pour mesurer le déplacement du fond des images.
La stabilisation accordée utilise le fait que pour des aéronefs du type hélicoptère, drone ou avion à hélices, la déstabilisation induite par les vibrations de l'aéronef est périodique et peut par conséquent se représenter sous la forme d'un spectre de raies (de fréquences $\Omega_n$). Les composantes spectrales principales en forme de raies sont par exemple dues à la rotation des pales d'un hélicoptère ou de l'hélice d'un turbopropulseur.
Pour les hélicoptères, la fréquence de la vibration fondamentale et ses harmoniques atteignent quelques dizaines de hertz. La fréquence fondamentale ne dépend que du type d'hélicoptère considéré. Elle ne dépend ni de la vitesse ni des conditions de vol, elle est donc connue a priori.
Pour les turbopropulseurs, ces fréquences peuvent atteindre quelques centaines de hertz. En vitesse de croisière, la fréquence fondamentale est stable. Cette déstabilisation périodique est déterministe. Elle peut être estimée en temps réel par un dispositif extérieur basé sur une boucle à verrouillage de phase. Il suffit que les variations de fréquence soient lentement variables. Le correcteur harmonique 424 les supposera connue dans la suite.
Les caractéristiques déterministes de la déstabilisation de la ligne de visée sont donc mesurables via une mesure de la déstabilisation. A l'inverse des systèmes perturbés aléatoirement, il est possible d'anticiper chaque composante sinusoïdale de la perturbation. Il est alors possible de réaliser une compensation optimisée globale.
Les connaissances précises du gain et du retard des moyens de stabilisation 431 ou 432, ainsi que le retard pur du dispositif global permettent une mise en oeuvre avantageuse de l'invention. Le gain et le retard sont constants à la fréquence de la perturbation $\Omega_n$, et peuvent se mesurer lors de l'intégration du système.
La connaissance en temps réel de trois grandeurs harmoniques de la déstabilisation de la ligne de visée ainsi que la connaissance du système considéré permettent également une mise en oeuvre avantageuse de l'invention. Le correcteur harmonique suppose avantageusement que :

a) la fréquence $\Omega_n$, est connue a priori ou estimée par un autre dispositif,
b) la fonction de transfert du système de stabilisation fine et de mesure permet de déterminer les doublets (gain, retard).
c) le retard pur du système $\Delta\theta_n$ - retard entre la prise de la mesure de déstabilisation et la commande du système de stabilisation fine - prend en compte les durées de transmission de l'information et les durées des différents calculs.

L'estimateur 45 va donner :

d) l'amplitude estimée de chaque raie,
e) la valeur instantanée estimée de chaque raie (ou la phase).

Ces hypothèses sont suffisantes pour permettre la compensation quasi exacte des raies perturbatrices par le prédicteur 46.
Le correcteur harmonique 424 se décompose préférentiellement en trois sous-ensembles.

L'estimateur 45

Les caractéristiques des composantes spectrales de la déstabilisation déterministe, doivent être estimées à partir de la mesure provenant des moyens de mesure 41. L'amplitude et la valeur instantanée (ou la phase) associées à chaque raie $\Omega_n$, sont données par l'estimateur 45.
La mesure est généralement effectuée par un capteur d'attitude 411. Elle peut également être effectuée par détection du déplacement du fond de l'image, par un écartométre 412. L'utilisation du flux vidéo, des moyens 44 d'acquisition d'images, permet une meilleure représentativité de la déstabilisation de la ligne de visée.

Un système comportant une mesure par écartométrie 412 fonctionne en boucle vidéo fermée 4b. Il est donc plus tolérant qu'un système en boucle vidéo ouverte (sans 4b). L'utilisation d'un écartomètre rend robuste les performances de la stabilisation accordée aux incertitudes/erreurs d'estimation de la déstabilisation à compenser.

Le prédicteur 46

Il est possible d'anticiper les retards, via un prédicteur 46, pour chaque composante sinusoïdale de la perturbation pour en réaliser une compensation optimisée à chaque fréquence.

La compensation par des amplificateurs 47

Des amplificateurs de gains 47 permettent avantageusement de générer un signal de compensation global, comme la somme pondérée des signaux de compensation pour chaque fréquence. Les gains permettent de compenser les atténuations du système de stabilisation ou d'amplifier la mesure dans le cas d'un bouclage vidéo fermé.

L'invention présente ainsi de nombreux avantages.

Elle permet notamment la compensation du retard du système pour les fréquences des perturbations.

Elle permet la compensation de l'atténuation du système pour les fréquences des perturbations.

Elle offre une plus grande bande passante que le système de l'art antérieur précédemment décrit.

Elle est simple à réaliser, stable, fiable et efficace.

Elle permet enfin d'augmenter la portée du dispositif de visée.

PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- La figure 1, déjà commentée, représente schématiquement un aéronef connu ;
- La figure 2, déjà commentée également, montre schématiquement un exemple d'un système connu de stabilisation de la ligne de visée d'un dispositif optronique ;
- La figure 3 présente des exemples d'améliorations de l'invention par rapport au schéma classique de la figure 2 ;
- Les figures 4a, 4b, 4c montrent schématiquement trois exemples de modes de réalisation d'une stabilisation accordée selon l'invention;
- La figure 5 montre de façon schématique en asservissement l'exemple de la figure 4a ;
- La figure 6 montre une approximation linéaire d'un module présent dans le mode de réalisation de la figure 5 ;
- La figure 7 représente schématiquement l'évolution de la fonction de transfert du système, en dB en fonction de la fréquence ; et
- La figure 8 représente schématiquement la modélisation de la déstabilisation sous forme d'un « vecteur tournant ».

Sur l'ensemble des figures, les éléments similaires portent des références numériques identiques.

DESCRIPTION DETAILLEE

Les notations suivantes seront utilisées dans l'exposé :

Variables temporelles

- $t$ : temps courant.
- $t_i$ : l'instant de la i<sup>ème</sup> mesure de déstabilisation (i quelconque).

Variables spectrales

- $s$ : variable de Laplace.

- $z$ : variable de la transformée en z.
- $\Omega_n$ : $n^{ième}$ fréquence du spectre de la déstabilisation.

Retards

- $\varepsilon$ : retard constant du système bouclé.
- $\Delta t_n$ : retard (déphasage) induit par la stabilisation fine 432 à la fréquence $\Omega_n$.
- $\Delta \theta_n$ : retard global de la boucle associé à la fréquence $\Omega_n$.
- la fonction de transfert d'un retard s'écrit : $\exp(-\Delta t.s)$.
- la fonction de transfert d'une anticipation s'écrit : $\exp(\Delta t.s)$.

Déstabilisation

- $D^*(t)$ : déstabilisation de la ligne de visée avant compensation par la stabilisation fine.
- $V^*(t)$ : résiduelle de déstabilisation après correction de l'actionneur de stabilisation fine 432.
- $V(t_i)$ : mesure de la déstabilisation de la ligne de visée après les moyens de mesure 41 à l'instant $t_i$
- $S^*(t)$ : composante périodique de la déstabilisation de la ligne de visée $V^*(t)$.
- $A_n$ : Amplitude de la n-ième composante sinusoïdale de $S^*(t)$.

- $S_n^*(t) = A_n . \sin(2\pi.\Omega_n.t + \Phi_n)$ : valeur instantanée de la n-ième composante sinusoïdale de $S^*(t)$, et $\Phi_n$ le déphasage.

- $B^*(t)$ : partie aléatoire de la déstabilisation de la ligne de visée $V^*(t)$.

Gains et fonctions de transfert

- $G(s)$ : fonction de transfert de l'actionneur de stabilisation fine 432.
- $G_n = |G(2\pi.\Omega_n)|$ : gain de la stabilisation fine à la fréquence $\Omega_n$.
- $G'(s)$ : fonction de transfert de l'actionneur de stabilisation fine plus le retard vidéo et écartométrique.
- $H(s)$ : fonction de transfert entre la stabilisation de la ligne de visée avant et après stabilisation fine dans le cas d'une boucle fermée sur la vidéo.
- $H_n(s)$ : fonction de transfert $H(s)$ dans le cas d'une compensation de la fréquence $\Omega_n$.
- $M(s)$ : fonction de transfert de déformation mécanique entre 411 et 431.

- $F_0(s), F_0(z)$ : fonction de transfert des filtres passe-bas pour l'estimation de l'amplitude $\hat{A}_n^2$ de l'estimateur 45.

- $F_n(s), F_n(z)$ : fonction de transfert du passe bande centré sur la fréquence $\Omega_n$, de l'estimateur 45-n. $F_n(s)$ servira dans l'approximation linéaire de 45-n.

Estimations et prédictions

- X : estimateur de la variable aléatoire X.
- $S'_n(t) = \hat{S}_n(t_i + \Delta\theta_n)$ : prédiction de la valeur instantanée de la nième composante spectrale, en sortie du prédicteur 46-n.
- $S'(t)$ : signal de correction en sortie de l'amplificateur 47.
- $\alpha_n$ : gain du module 47-n.
- $K_n(s)$ : fonction linéaire équivalent de 45-n+46-n+47-n.
- $K(s)$ : fonction linéaire équivalent de 45+46+47.

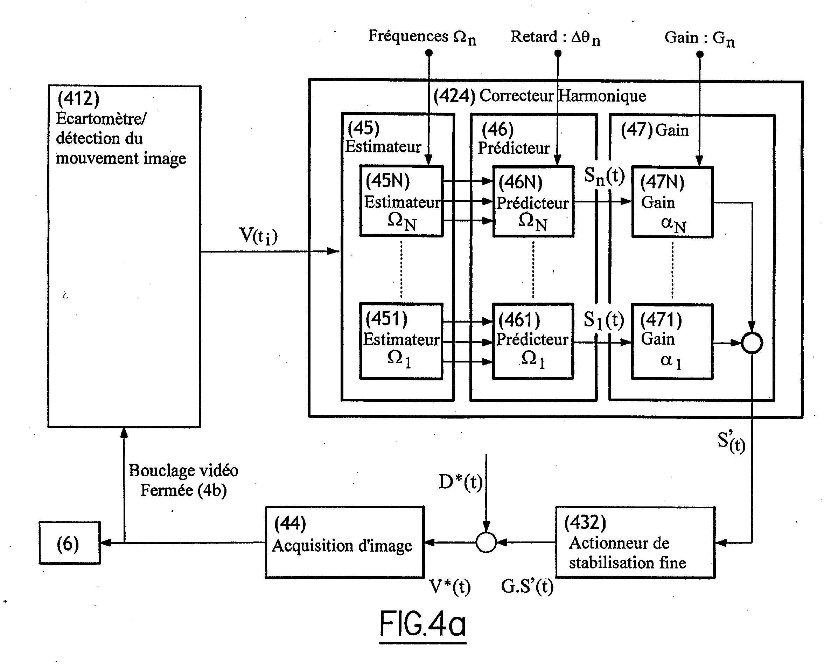

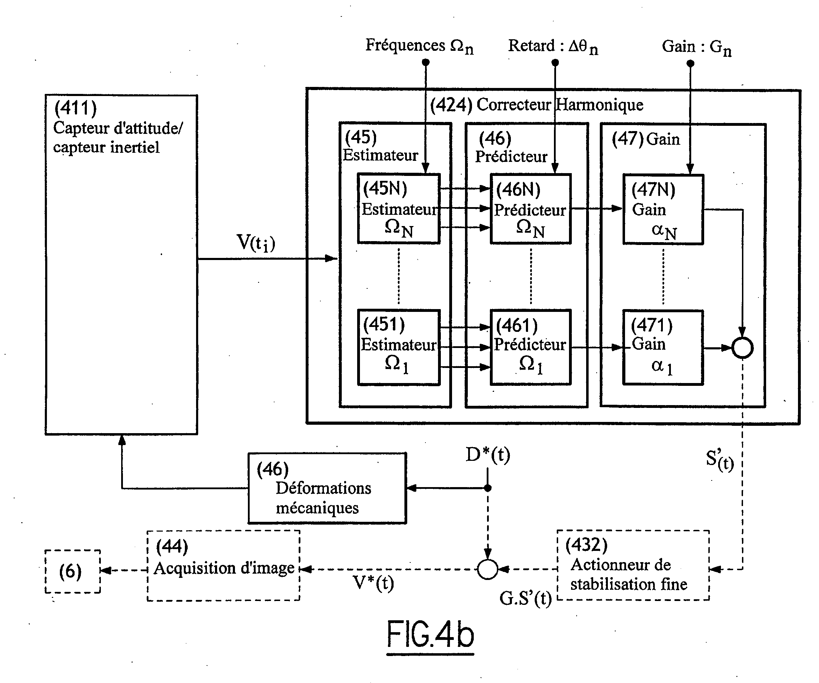

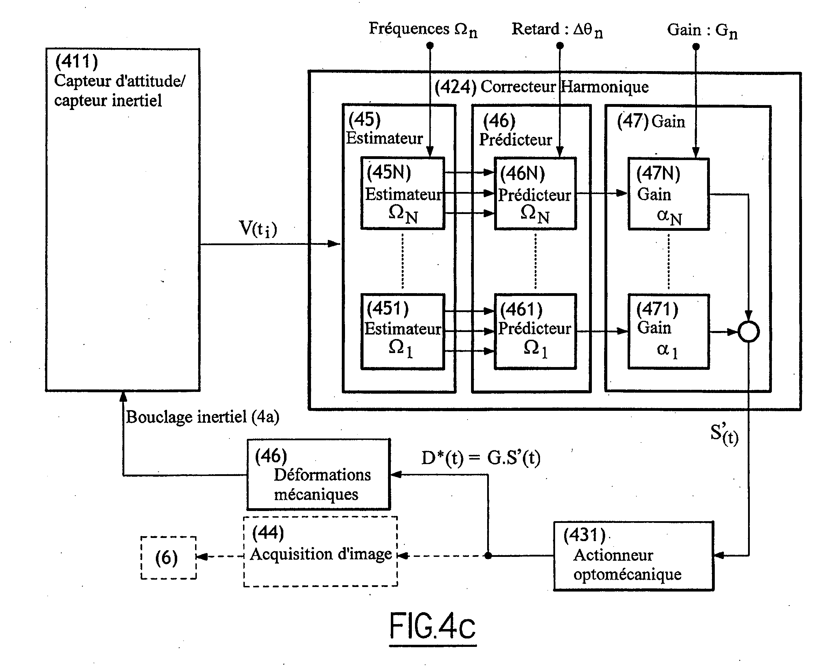

Les figures 4a, 4b et 4c montrent schématiquement trois exemples de modes de réalisation selon l'invention d'un système de stabilisation accordée d'un dispositif optronique.

Dans ces trois modes de réalisation, le système de stabilisation comporte des moyens de mesure 41 et un actionneur 43 de compensation de la déstabilisation.

Le système comporte en outre un correcteur harmonique 424, comme décrit ci-dessous, situé entre les moyens de mesure 41 et l'actionneur de stabilisation 43.

La déstabilisation de la ligne de visée est un phénomène déterministe. Elle peut se décomposer sur une base de sinus. La déstabilisation résiduelle est alors la somme d'une composante périodique $S^*(t)$, et d'une composante aléatoire $B^*(t)$ (vent, frottements, résonances mécaniques large bande, etc), non compensable par cette méthode :

$$V^*(t) = S^*(t) + B^*(t).$$

La composante périodique $S^*(t)$ se décompose sur une base de sinus de la façon suivante :

$$S^*(t) = \sum_{n=1}^{N} S_n^*(t) = \sum_{n=1}^{N} A_n.\sin\left(2\pi.\Omega_n.t + \Phi_n\right)$$

avec N quelconque.

Par ailleurs, les moyens de mesure 41 peuvent comporter un capteur d'attitude 411ou un écartomètre 412.

Un tel capteur d'attitude 411 peut se présenter sous la forme d'un gyromètre, d'un gyroscope, d'une combinaison d'accéléromètres et/ou d'une centrale inertielle par exemple.

L'écartomètre 412 pourra détecter le déplacement de la scène par corrélation d'images par exemple.

La mesure de la stabilisation donne la mesure de la stabilisation de la ligne de visée mais retardée d'un nombre de trame et d'un retard de calcul fixe :

$$V(t) = V^*(t - \varepsilon) .$$

La stabilisation harmonique suppose un certain nombre de connaissances a priori. Les fréquences $\Omega_n$ de la décomposition de la déstabilisation périodique, le retard vidéo $\varepsilon$, le retard $\Delta t_n$ dû au déphasage

$$\Delta t_n = -\frac{\varphi_n}{2\pi.\Omega_n},$$

et les atténuations $G_n$

$$G_n = \left|G(2\pi.\Omega_n)\right|,$$

du système de stabilisation fine sont supposés connus.

Le correcteur harmonique 424 comporte préférentiellement trois types de sous modules :

I) des estimateurs 45,
II) des prédicteurs 46,
III)des amplificateurs de gains 47.

L'estimateur 45 est apte à prendre en compte au moins une fréquence, $\Omega_n$, de la déstabilisation. Le prédicteur 46 prend en compte un retard $\Delta\theta_n$. L'amplificateur de gain 47 prend en compte l'atténuation $G_n$ entre la compensation et la mesure de la déstabilisation.

I) L'estimateur 45 comporte préférentiellement au moins un filtre passe-bande centré sur une fréquence $\Omega_n$, de sorte que la mesure de déstabilisation $V(t_i)$ peut être décomposée en au moins un signal sinusoïdal. Préférentiellement, l'estimateur 45 comporte N filtres passe-bande. Le centrage sur la fréquence peut s'effectuer avec une petite tolérance, c'est à dire avec un intervalle autour de la fréquence $\Omega_n$, par exemple de l'ordre de $\pm 10\%.\Omega_n$.

L'estimateur 45 est ainsi apte à déterminer trois informations :

1) la valeur instantanée de la composante sinusoïdale $\hat{S}_n(t_i)$, voir (Eq-1) plus bas,
2) l'amplitude $\hat{A}_n$, voir (Eq-2) plus bas,
3) éventuellement la phase $\hat{\Phi}_n$,

de chaque composante sinusoïdale.

II) En outre, le correcteur harmonique 424 comporte un prédicteur 46 qui prend en compte la prédiction de chaque composante sinusoïdale pour compenser le retard $\Delta\theta_n$ du système (entre la compensation et la mesure de la déstabilisation). Pour chaque fréquence, un signal

$$S'_n(t) = \hat{S}_n(t_i + \Delta\theta_n)$$

de compensation est généré, voir (Eq-3) plus bas.

III) Avantageusement, un amplificateur 47 permet de générer un signal de compensation, $S'(t)$, comme une combinaison des signaux de compensation pour chaque fréquence $S'_n(t)$ et de gains $\alpha_n$, (voir (Eq-4) plus bas), ce qui permet de compenser éventuellement les atténuations $G_n$, du système de stabilisation.

Les modules I et II du correcteur harmonique peuvent être avantageusement remplacés par l'estimateur et le prédicteur d'un filtre de Kalman. Dans ce cas, au moins un filtre de Kalman regroupe par paires un estimateur et un predicteur.

Avantageusement, dans le cas de l'utilisation d'un filtre de Kalman, on modélise la déstabilisation sous forme d'un « vecteur tournant », comme le montre la figure 8.

Une déstabilisation sinusoïdale à la fréquence $\Omega_n$, échantillonnée avec la période, $T_e$ =1/2000 s, peut en effet être modélisée par la projection sur l'axe des abscisses d'un vecteur tournant à vitesse constante. On pose :

$$\mathbf{X}_k = \begin{bmatrix} r.\cos(2\pi.\Omega_n.k.T_e + \varphi) \\ r.\sin(2\pi.\Omega_n.k.T_e + \varphi) \end{bmatrix}$$

le vecteur tournant avec un déphasage initial $\varphi$, et

$$\mathbf{Y}_k = \begin{bmatrix} 1 & 0 \end{bmatrix} \mathbf{X}_k$$

sa projection sur l'axe des abscisses.

La transition de l'état du vecteur tournant entre l'instant k et l'instant k+1 (déstabilisation) s'écrit sous forme d'un produit de matrice de rotation :

$$\begin{bmatrix} r.\cos(2\pi.\Omega_n.(k+1).T_e + \varphi) \\ r.\sin(2\pi.\Omega_n.(k+1).T_e + \varphi) \end{bmatrix} = \begin{bmatrix} \cos(2\pi.\Omega_n.T_e) & -\sin(2\pi.\Omega_n.T_e) \\ \sin(2\pi.\Omega_n.T_e) & \cos(2\pi.\Omega_n.T_e) \end{bmatrix} \begin{bmatrix} r.\cos(2\pi.\Omega_n.k.T_e + \varphi) \\ r.\sin(2\pi.\Omega_n.k.T_e + \varphi) \end{bmatrix}$$

La mise en place d'un filtre de Kalman est connue de l'homme du métier et n'est pas reprise ici en détail, mais on précise ici qu'une telle notation de la déstabilisation permet une simplification de la mise en place du filtre de Kalman.

La connaissance a priori des fréquences de la composante périodique de la déstabilisation évite notamment un repliement de spectre au-delà de 50 Hz, ce qui est avantageux puisque, en général, les fréquences $\Omega_n$ à compenser sont 22Hz, 44Hz, 66Hz et 88Hz.

Le système des figures 4a et 4b comporte en outre un actionneur de stabilisation fine 432. L'actionneur 432 déplace la ligne de visée pendant l'acquisition d'une image, en fonction du signal $S'(t)$ reçu du correcteur harmonique 424.

L'actionneur de stabilisation fine 432 peut comporter des moyens de stabilisation fine électroniques, comme par exemple des moyens de balayage électroniques aptes à modifier la position de la ligne de visée par rapport aux moyens d'acquisition 44.

Préférentiellement, l'actionneur de stabilisation fine 432 comporte des moyens de stabilisation fine optomécaniques.

Avantageusement, les moyens de stabilisation fine optomécaniques 432 comportent des moyens de déplacement d'une plaque de stabilisation fine de la ligne de visée, la plaque étant située entre les correcteurs 42 et les moyens d'acquisition 44.

La plaque se présente ainsi sous la forme d'au moins une lame dans un matériau à fort indice optique et/ou d'au moins un miroir et/ou d'un prisme par exemple, montés en rotation de façon à pouvoir effectuer une stabilisation fine de la ligne de visée.

La déstabilisation de la ligne de visée obtenue par le correcteur optomécanique $D^*(t)$, via l'actionneur optomécanique 431, peut être amélioré par l'actionneur de stabilisation fine 432, ce qui s'écrit :

$$V^*(s) = D^*(s) - G(s).S'(s)$$

avec $G(s)$ sa fonction de transfert :

$$G(s) = \left|G(s)\right|.\exp i.\varphi(s) \,.$$

La figure 4a montre qu'avantageusement, lorsque les moyens de mesure 41 comportent un écartomètre 412, l'effet de l'actionneur de stabilisation fine 432 est vu par l'écartomètre. Le système forme alors une boucle vidéo fermée 4b. Dans le cas de la boucle vidéo fermée, le correcteur 424 harmonique ne va pas forcément créer un signal de compensation de même amplitude et en opposition de phase. Un fort gain peut être appliqué, afin de retrouver les avantages de la boucle fermée.

La figure 4b montre que lorsque le capteur d'attitude 411 et l'actionneur de stabilisation fine 432 sont désolidarisés, le système forme une boucle ouverte. Il n'y a pas de bouclage vidéo. Dans le cas de la boucle vidéo ouverte, les connaissances des fréquences de déstabilisation $\Omega_n$, des retards $\Delta\theta_n$ et des atténuations $G_n$, permettent au correcteur harmonique 424 de générer a priori un signal analogique $S'(t)$ en opposition de phase avec la déstabilisation $S^*(t)$. Ce signal est envoyé à l'entrée de l'actionneur de stabilisation 432.

La figure 4c montre que le capteur d'attitude 411 et l'actionneur optomécanique 431 sont mécaniquement solidaires. Le système forme une boucle inertielle fermée de stabilisation, qui ne peut cependant pas compenser les déformations mécaniques $M(s)$ entre le capteur inertiel et optique.

PRESENTATION D'UN EXEMPLE D'UN SYSTEME DE STABILISATION ACCORDEE

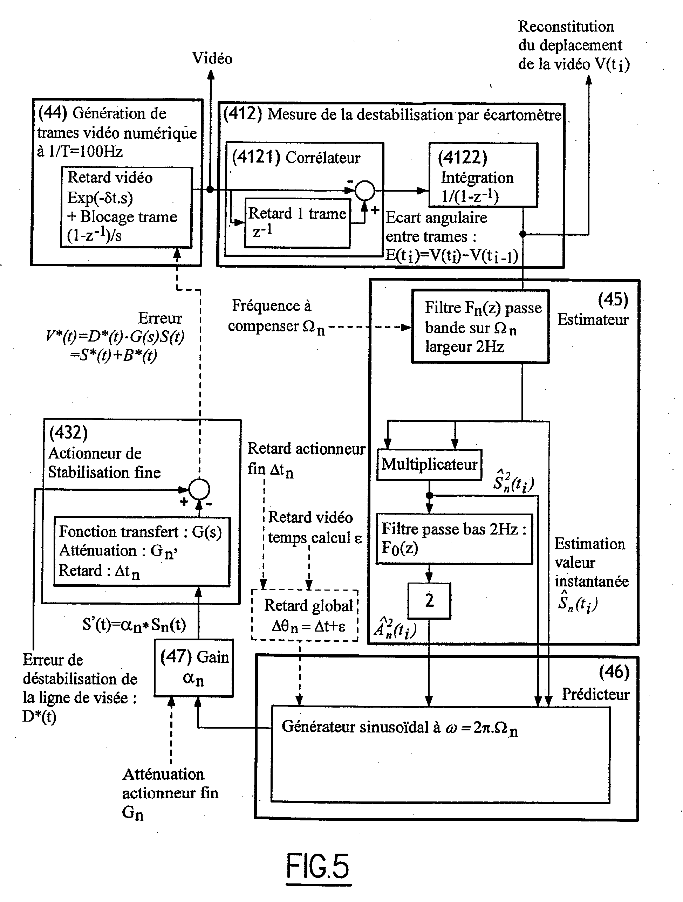

Les développements qui suivent se lisent avantageusement en référence à la figure 5, qui montre de façon schématique la stabilisation accordée dans l'exemple de la boucle vidéo fermée, de la figure 4a.

On décrit par la suite un exemple d'un système de stabilisation, ainsi que son fonctionnement, pour une fréquence de déstabilisation $\Omega_n$ et une cadence vidéo des moyens d'acquisition 44 de 100 Hz. On ne considère qu'une fréquence de déstabilisation, mais le traitement est bien entendu le même quel que soit le nombre de fréquences que l'on considère.

Les moyens d'acquisition 44 acquièrent des images sous la forme de trames vidéo. Cette acquisition est perturbée par la déstabilisation. Les moyens d'acquisition d'image 44 et le traitement de l'écartomètre 412 induisent un retard vidéo ainsi qu'un blocage de trame et un retard de calcul qu'il faut ajouter au retard introduit par l'actionneur de stabilisation fine 432.

L'écartomètre 412 comporte un corrélateur 4121, apte à mesurer l'écart relatif de ligne de visée d'une trame initiale à une trame suivante.

a) L'écart relatif se mesure par exemple par corrélation d'un motif 7x7, le motif étant issu de la trame initiale, dans une zone 10x10 ou 11x11 dans la trame suivante. Les indices du maximum de la fonction d'intercorrélation sont obtenus par mesure de centre de contraste. Ces indices constituent le décalage de la ligne de visée entre deux trames. La fiabilité de la mesure dépend fortement du contraste du motif de corrélation.

On réalise cette estimation sur plusieurs zones dans l'image, en pondérant les résultats par la variance des motifs. Les zones sont proches de l'axe de visée du dispositif, pour éviter que le roulis de l'aéronef ne fausse la mesure.

Il faut de plus noter que dans le cas où la demi fréquence d'échantillonnage est proche de $\Omega_n$, la détermination de l'amplitude de la composante $\Omega_n$ est un peu plus longue à réaliser (de l'ordre de quelques secondes) que lorsque la demi fréquence d'échantillonnage est éloignée de $\Omega_n$.

b) Une autre méthode pour mesurer l'écart relatif consiste à réaliser une intercorrélation sur une portion de ligne obtenue en moyennant plusieurs lignes adjacentes, ou sur la base de leur variance.

Des moyens d'intégration 4212 compris dans l'écartomètre 421 permettent une intégration de la mesure d'écart relatif.

La mesure se modélise pour l'approximation linéaire par un simple retard :

$$V(s) = V^*(s).\exp(-\varepsilon.s) \quad \text{(BF-1)}$$

Le paragraphe ci-dessous va donner les équations non-linéaires d'un correcteur harmonique 424.

Préférentiellement, l'estimateur 45 comporte un filtre passe-bande qui filtre la mesure temporelle de déstabilisation entre $\Omega_n$. -2 Hz et $\Omega_n$ +2Hz. Le système n'est pas limité par la fréquence d'échantillonnage puisque les fréquences $\Omega_n$ étant connues a priori, leurs valeurs repliées le sont également.

Grâce au filtre $F_n(z)$, centré sur $\Omega_n$, l'estimation de la composante sinusoïdale de $V(t_i)$ à la fréquence $\Omega_n$ s'écrit :

$$\hat{S}_n(z) = F_n(z).V(z) \qquad \text{(Eq-1)}$$

L'estimateur 45 donne aussi l'amplitude estimée, en ne gardant que la composante continue du carré de la perturbation sinusoïdale par la relation :

$$\hat{S}_n^2(t_i) = \frac{\hat{A}_n^2}{2}\left[1 - \cos\left(4\pi\Omega_n.t_i + 2\hat{\phi}_n\right)\right]$$

Il vient alors :

$$\hat{A}_n(z) = \sqrt{2.F_0(z).\hat{S}_n^2(z)} \qquad \text{(Eq-2)}$$

$\hat{A}_n(z)$ est supposé constant ou faiblement variable devant la période trame : $\hat{A}_n(z) = \hat{A}_n$.

On va maintenant décrire le fonctionnement du prédicteur 46 en sortie de l'estimateur 45.

Expliquons tout d'abord le calcul du déphasage. Soit $\Delta\theta_n$, le retard entre l'acquisition de la trame vidéo i et l'effet de la compensation de la déstabilisation par l'actionneur de stabilisation 43. On pose :

$$t = t_i + \Delta\theta_n = t_i + \Delta t_n + \varepsilon$$

La composante $\Omega_n$ de la résiduelle de stabilisation $S^*(t)$ est supposée connue et s'écrit à l'instant $t_i$ :

$$S_n^*(t_i) = A_n \cos(2\pi.\Omega_n.t_i + \Phi_n)$$

De même, à l'instant t, suivant le signe de $A_n^2 - S_n^2$ :

$$S_{\mathrm{n}}^{\star}(t) = S_{\mathrm{n}}^{\star}(t_i + \Delta\theta_n) = S_{\mathrm{n}}^{\star}(t_i)\cos(2\pi.\Omega_n\,\Delta\theta_n) \mp \sin(2\pi\Omega_n\,\Delta\theta_n)\sqrt{\left|A_{\mathrm{n}}^2 - S_{\mathrm{n}}^{\star 2}\right|}$$

Le prédicteur 46 est conçu en remplaçant les valeurs théoriques par leurs estimations :

$$\hat{S}_n(t_i) \approx S_n^{\star}(t_i)$$

$$\hat{A}_n \approx A_n.$$

Le prédicteur 46 donnera :

$$S'_{\mathrm{n}}(t) = \hat{S}_n(t_i)\cos(2\pi\Omega_n.\Delta\theta_n) \mp \sin(2\pi\Omega_n.\Delta\theta_n)\sqrt{\left|\hat{A}_{\mathrm{n}}^2 - \hat{S}_{\mathrm{n}}^2(t_i)\right|} \quad \text{(Eq-3)}.$$

La relation (Eq-3) montre que $S'_{\mathrm{n}}(t)$ est parfaitement déterminé si $\Omega_n$, $\hat{S}_n(t_i)$, $\hat{A}_n$, et $\Delta\theta_n$ sont connus. Il est clair également que la pertinence du signal $S'_{\mathrm{n}}(t)$ dépend de la précision de la mesure de $\Delta\theta_n$ et de la qualité des estimations $\hat{S}_n(t_i)$, $\hat{A}_n$.

La gestion du signe de la racine carrée de l'équation (Eq-3) peut-être avantageusement remplacée par la dérivation du signal. Le correcteur devient une combinaison linéaire d'un terme proportionnel et d'un terme dérivé :

$$S'_{\mathrm{n}}(t) = \hat{S}_n(t_i)\cos(2\pi\Omega_n.\Delta\theta_n) + \frac{1}{2\pi.\Omega_n}\frac{d\hat{S}_n}{dt}\sin(2\pi\Omega_n.\Delta\theta_n)$$

La combinaison linéaire des gains des amplificateurs 47 appliqués aux signaux de prédiction donne le signal de correction en sortie du correcteur harmonique :

$$S'(t) = \sum_{n=1}^{N}\alpha_n.S'_n(t) \quad \text{(Eq-4)}$$

L'estimation de l'amplitude, $\hat{A}_n$, rend l'asservissement selon la figure 5 non linéaire. Les équations (Eq-1) (Eq-2) (Eq-3) et (Eq-4) dans l'approximation linéaire du correcteur harmonique, seront notées par la fonction de transfert :

$$K(s) = \frac{S'(s)}{V(s)} = \sum_{n=1}^{N}\alpha_n.\exp(s.\Delta\theta_n).F_n(s) \quad \text{(BF-2)}$$

Le filtre analogique équivalent du passe bande de l'estimateur 45-n sera par exemple du type:

$$F_n(s) = \frac{2\xi \dfrac{s}{\omega}}{1 + 2\xi \dfrac{s}{\omega} + \left(\dfrac{s}{\omega}\right)^2}$$

avec $\omega = 2\pi\Omega_n$ rad/s.

La fonction de transfert de l'actionneur de stabilisation fine 432 peut se simplifier au voisinage de la fréquence $\Omega_n$ :

$$G(s)\big|_{s\approx 2\pi i\Omega_n} \approx G_n.\exp\varphi_n \approx G_n.\exp(-s.\Delta t_n)\big|_{s\approx 2\pi i\Omega_n} = G_n(s)\big|_{s\approx 2\pi i\Omega_n} \quad \text{(BF-3)}$$

La stabilisation fine peut se modéliser par une simple différence, assurant ainsi la contre-réaction.

$$V^*(s) = D^*(s) - G(s).S'(s) \quad \text{(BF-4)}$$

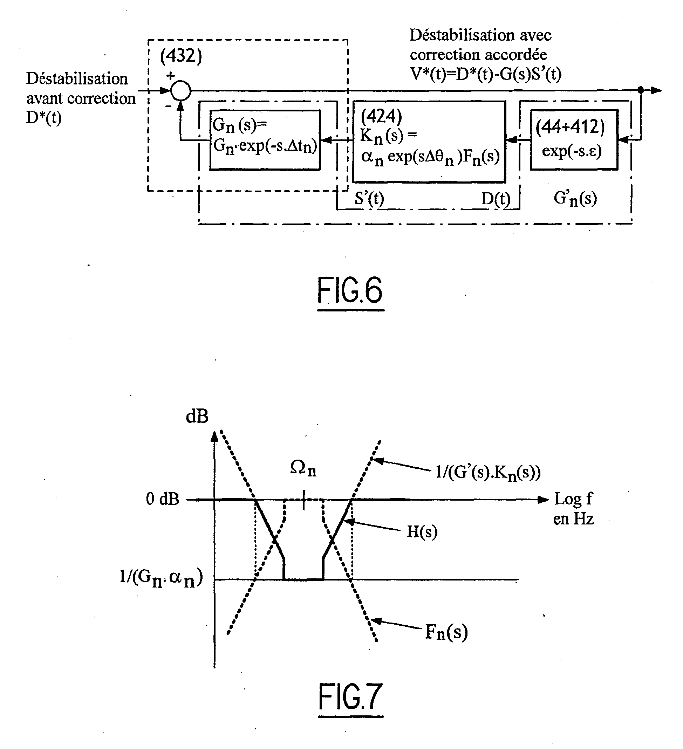

La figure 6 montre une approximation linéaire du schéma de la figure 5. En prenant l'approximation linéaire et en temps continu, l'écartomètre 412 ainsi que l'estimateur 45, le prédicteur 46 seront considérés comme parfaits.

En boucle fermée, l'action du correcteur harmonique et de l'écartométrie influera sur la mesure de déstabilisation suivant les relations (BF-1) (BF-2):

$$S'(s) = K(s).V(s) = K(s).\exp(-\varepsilon.s).V^*(s)$$

avec la relation (BF-4) de la stabilisation fine :

$$V^*(s) = D^*(s) - G(s).S'(s) = D^*(s) - G(s).K(s).\exp(-\varepsilon.s).V^*(s).$$

La fonction transfert globale de la stabilisation accordée est alors:

$$H(s) = \frac{V^*(s)}{D^*(s)} = \frac{1}{1 + G'(s).K(s)} \quad \text{(AL-1)}$$

avec

$$G'(s) = G(s).\exp(-s.\varepsilon).$$

La fonction de transfert $G'(s).K(s)$ au voisinage de $\Omega_n$, grâce à (BF-2) et (BF-3), devient:

$$G'(s).K(s) \approx G_n(s).\exp(-s.\varepsilon).K_n(s)$$
$$\approx G_n.\exp(-s.\Delta t_n).\exp(-s.\varepsilon).\alpha_n.F_n(s).\exp(s.\Delta \theta_n) \quad .$$
$$= G_n.\alpha_n.F_n(s)$$

Au voisinage de la fréquence choisie, la fonction de transfert se simplifie:

$$H(s) \approx H_{.n}(s) = \frac{1}{1 + G_n.\alpha_n.F_n(s)} \qquad \text{(AL-2)}.$$

L'étude fréquentielle (AL-2) peut être simplifiée si l'on considère le comportement asymptotique.

$$\text{-Si } F_n(s) >> \frac{1}{G_n.\alpha_n} \text{ alors } H_n(s) \approx \frac{1}{G_n.\alpha_n.F_n(s)}$$

$$\text{-Si } F_n(s) << \frac{1}{G_n.\alpha_n} \text{ alors } H_n(s) \approx 1$$

La figure 7 représente schématiquement l'évolution de la fonction de transfert $H(s)$ en dB en fonction de la fréquence. La fonction de transfert $H(s)$ se comporte comme un coupe bande à la fréquence $\Omega_n$ et d'atténuation $\frac{1}{G_n.\alpha_n}$. La largeur du coupe bande dépend de la bande passante du passe bande mais aussi du gain $G_n.\alpha_n$.

**Revendications**

1. Système de stabilisation accordée d'une ligne de visée d'un dispositif optronique (4), comportant

   - des moyens de mesure (41) aptes à mesurer une déstabilisation (5, 5') de la ligne de visée, la déstabilisation contenant au moins une composante périodique de fréquence ($\Omega_n$) connue a priori et/ou lentement variable dans le temps;
   - un correcteur (424) apte à générer un signal de compensation en fonction de la déstabilisation mesurée, le correcteur (424) comportant :

      - au moins un estimateur (45) apte à estimer des paramètres d'une fonction représentative de la déstabilisation,
      - au moins un prédicteur (46) apte à prendre en compte la prédiction d'un retard ($\Delta\theta_n$) entre la compensation et la mesure de la déstabilisation, le système comportant en outre :

      - un actionneur de stabilisation (43) apte à compenser la déstabilisation,

   **caractérisé en ce que**
   le correcteur est harmonique (424),
   chaque estimateur (45) comportant au moins un filtre centré sur chaque fréquence ($\Omega_n$) connue a priori et/ou lentement variable dans le temps pour :

      décomposer chaque composante périodique en au moins un signal sinusoïdal ($\hat{S}_n(t_i)$), et

estimer une amplitude ($\hat{A}_n$) et une phase ($\hat{\Phi}_n$) de chaque signal sinusoïdal.

**2.** Système selon la revendication précédente, dans lequel le correcteur harmonique (424) comporte au moins un amplificateur (47) apte à générer un gain de correction en sortie d'au moins un prédicteur (46).

**3.** Système selon la revendication précédente, comportant en outre des moyens aptes à effectuer une combinaison de prédictions des prédicteurs (46) et de gains en sortie des amplificateurs (47).

**4.** Système selon l'une des revendications 2-3, dans lequel les amplificateurs (47) sont aptes à prendre en compte une atténuation entre la compensation et la mesure de la déstabilisation.

**5.** Système selon l'une des revendications 2-3, dans lequel les amplificateurs (47) sont situés dans une boucle d'asservissement.

**6.** Système selon l'une des revendications précédentes, dans lequel chaque prédicteur (46) est apte à calculer n signaux de correction ($S'_n$ (t) ), ce qui permet de corriger un retard global $\Delta\theta_n$ du dispositif.

**7.** Système selon l'une des revendications précédentes, dans lequel au moins un filtre de Kalman regroupe par paires un estimateur et un prédicteur.

**8.** Système selon l'une des revendications précédentes, dans lequel le correcteur harmonique (424) est apte à générer un signal de compensation en opposition de phase avec le signal de déstabilisation.

**9.** Système selon l'une des revendications précédentes, dans lequel l'actionneur de stabilisation (43) est apte à stabiliser la ligne de visée (5) pendant une acquisition d'une image par des moyens d'acquisition (44) du système

**10.** Système selon la revendication 9, dans lequel l'actionneur (43) comporte un actionneur optomécanique (431).

**11.** Système selon l'une des revendications 9-10, dans lequel les moyens (41) de mesure comportent un capteur d'attitude.

**12.** Système selon les revendications 10-11, dans lequel, l'actionneur optomécanique (431) est solidaire du capteur d'attitude (411), de sorte que le système forme une boucle inertielle fermée.

**13.** Système selon la revendication 9, dans lequel l'actionneur (43) comporte un actionneur de stabilisation fine (432).

**14.** Système selon la revendication 13, dans lequel l'actionneur de stabilisation fine (432) comporte des moyens optomécaniques de déplacement de la ligne de visée (5, 5') avec au moins un degré de liberté par rapport au capteur d'attitude (411).

**15.** Système selon la revendication 14, dans lequel les moyens optomécaniques de déplacement de la ligne de visée (5, 5') comportent des moyens de déplacement d'une lame, d'un miroir ou d'un prisme de stabilisation fine de la ligne de visée (5, 5'), la lame, le miroir ou le prisme étant situés entre le correcteur harmonique (424) et des moyens d'acquisition (44).

**16.** Système selon la revendication 14, dans lequel l'actionneur de stabilisation fine (432) comporte des moyens de stabilisation électronique fine.

**17.** Système selon l'une des revendications 9-10, dans lequel les moyens (41) de mesure comportent un écartomètre (412) lié à un des moyens d'acquisition d'image (44).

**18.** Système selon la revendication précédente; dans lequel l'écartomètre (412) est apte à mesurer le déplacement d'une scène, de sorte que le système forme une boucle vidéo fermée.

**19.** Procédé de stabilisation accordée d'une ligne de visée (5) d'un dispositif optronique (4), comportant des étapes de :

- mesure d'une déstabilisation (5, 5') de la ligne de visée par des moyens de mesure (41), la déstabilisation contenant au moins une composante périodique de fréquence ($\Omega_n$) connue a priori et/ou lentement variable dans le temps ;
- génération d'un signal de compensation en fonction de la déstabilisation mesurée par un correcteur (424), la génération du signal de compensation comprenant les étapes :

- d'estimation, par au moins un estimateur (45) compris dans le correcteur (424), des paramètres d'une fonction représentative de la déstabilisation ;
- de prise en compte de la prédiction d'un retard ($\Delta\theta_n$) entre la compensation et la mesure de la déstabilisation, par au moins un prédicteur (46) compris dans le correcteur,

- le procédé comportant en outre une compensation de la déstabilisation par un actionneur de stabilisation (43),

**caractérisé en ce qu'**il comporte des étapes de :

- filtrage de la déstabilisation par au moins un filtre, compris dans l'estimateur (45) et centré sur chaque fréquence ($\Omega_n$) connue a priori et/ou lentement variable dans le temps ;
- décomposition, par l'estimateur, de chaque composante périodique en au moins un signal sinusoïdal ($\hat{S}_n(t_i)$), et
- d'estimation, par l'estimateur, d'une amplitude ($\hat{A}_n$) et d'une phase ($\hat{\Phi}_n$) de chaque signal sinusoïdal.

20. Procédé selon la revendication précédente, comportant une étape de génération d'un gain de correction en sortie d'au moins un prédicteur (46) grâce à au moins un amplificateur (47) compris dans le correcteur.

21. Procédé selon la revendication précédente, comportant en outre une étape de combinaison de prédictions des prédicteurs (46) et de gains en sortie des amplificateurs (47).

22. Procédé selon l'une des trois revendications précédentes, comportant une étape de calcul de n signaux de correction ($S_,n(t)$) par chaque prédicteur (46).

23. Procédé selon l'une des quatre revendications précédentes, comportant une étape de regroupement par paires d'un estimateur et d'un prédicteur dans au moins un filtre de Kalman.

24. Procédé selon l'une des cinq revendications précédentes, comportant une étape de génération d'un signal de compensation en opposition de phase avec le signal de déstabilisation par le correcteur harmonique (424).

25. Procédé selon l'une des six revendications précédentes, comportant les étapes de :

- mesure d'une déstabilisation de la ligne de visée (5, 5') par un écartomètie (412) ;
- génération d'un signal de compensation par un correcteur harmonique (424) ;
- momification de la position de la ligne de visée et/ou d'une image acquise par des moyens d'acquisition (44) par un actionneur de stabilisation fine (432).

26. Procédé selon l'une des sept revendications précédentes, comportant une étape d'estimation de la fréquence avec une boucle à verrouillage de phase lente par rapport à cette fréquence.

27. Procédé selon l'une des huit revendications précédentes, comportant une étape de stabilisation, par l'actionneur de stabilisation (43), de la ligne de visée (5) en fonction du signal reçu du correcteur harmonique (424) qui est une combinaison linéaire des signaux issus des prédicteurs.

## Claims

1. A system for tuned stabilization of a line of sight of an optronic device (4), including

- measurement means (41) capable of measuring destabilization (5,5') of the line of sight, the destabilization containing at least one periodic frequency $\Omega_n$) component, a priori known and/or slowly variable over time;
- a corrector (424) capable of generating a compensation signal depending on the measured destabilization, the corrector (424) including:

- at least one estimator (45) capable of estimating parameters of a representative function of the destabilization,
- at least one predictor (46) capable of taking into account the prediction of a delay $\Delta\theta_n$) between the compensation and the measurement of the destabilization,

the system further including:

- a stabilization actuator (43) capable of compensating the destabilization,

**characterized in that**
the corrector is harmonic (424),
each estimator (45) including at least one filter centered on each frequency $(\Omega_n)$ a priori known and/or slowly variable over time, in order to:

break down each periodic component into at least one sinusoidal signal $(S_n(t_i))$, and
estimate an amplitude $(\hat{A}_n)$ and a phase $(\hat{\Phi}_n)$ of each sinusoidal signal.

2. The system according to the preceding claim, wherein the harmonic corrector (424) includes at least one amplifier (47) capable of generating a correction gain at the output of at least one predictor (46).

3. The system according to the preceding claim, further including means capable of carrying out a combination of predictions from predictors (46) and of gains at the output of the amplifiers (47).

4. The system according to any of claims 2 to 3, wherein the amplifiers (47) are capable of taking into account attenuation between the compensation and the measurement of the destabilization.

5. The system according to any of claims 2 to 3, wherein the amplifiers (47) are located in a feedback loop.

6. The system according to any of the preceding claims, wherein each predictor (46) is capable of calculating n correction signals $(S'_n(t))$, which allows correction of a global delay $(\Delta\theta_n)$ of the device.

7. The system according to any of the preceding claims, wherein at least one Kalman filter groups an estimator and a predictor pairwise.

8. The system according to any of the preceding claims, wherein the harmonic corrector (424) is capable of generating a compensation signal in opposite phase with the destabilization signal.

9. The system according to any of the preceding claims, wherein the stabilization actuator (43) is capable of stabilizing the line of sight (5) during acquisition of an image by the acquisition means (44) of the system.

10. The system according to claim 9, wherein the actuator (43) includes an optomechanical actuator (431).

11. The system according to any of claims 9 to 10, wherein the measurement means (41) include an attitude sensor.

12. The system according to claims 10 to 11, wherein the optomechanical actuator (431) is interdependent of the attitude sensor (411), so that the system forms a closed inertial loop.

13. The system according to claim 9, wherein the actuator (43) includes a fine stabilization actuator (432).

14. The system according to claim 13, wherein the fine stabilization actuator (432) includes optomechanical means for displacing the line of sight (5, 5') with at least one degree of freedom relatively to the attitude sensor (411).

15. The system according to claim 14, wherein the optomechanical means for displacing the line of sight (5, 5') include means for displacing a plate, a mirror or a prism for fine stabilization of the line of sight (5, 5'), the plate, the mirror or the prism being located between the harmonic corrector (424) and acquisition means (44).

16. The system according to claim 14, wherein the fine stabilization actuator (432) includes fine electronic stabilization means.

17. The system according to any of claims 9 to 10, wherein the measurement means (41) include a deviation-measuring device (412) linked to one of the image acquisition means (44).

18. The system according to the preceding claim, wherein the deviation-measuring device (412) is capable of measuring the displacement of a scene, so that the system forms a closed video loop.

19. A method for tuned stabilization of a line of sight (5) of an optronic device (4), including the steps of:

- measuring destabilization (5, 5') of the line of sight by measurement means (41), the destabilization containing at least one periodic frequency ($\Omega_n$) component, a priori known and/or slowly variable over time;
- generating a compensation signal depending on the destabilization measured by a corrector (424), the generation of the compensation signal comprising the steps of:

- estimating, with at least one estimator (45) comprised in the corrector (424), parameters of a representative function of the destabilization;
- taking into account the prediction of a delay ($\Delta\theta_n$) between the compensation and the measurement of the destabilization, with at least one predictor (46) comprised in the corrector,

- the method further including compensation of the destabilization by a stabilization actuator (43),

**characterized in that** it includes steps of:

- filtering the destabilization with at least one filter, comprised in the estimator (45) and centered on each frequency ($\Omega_n$) a priori known and/or slowly variable over time;
- breaking down with the estimator, each periodic component into at least one sinusoidal signal $(S_n(t_i))$, and
- estimating with the estimator, an amplitude ($A_n$) and a phase ($\hat{\Phi}_n$) of each sinusoidal signal.

20. The method according to the preceding claim, including a step for generating a correction gain at the output of at least one predictor (46) by means of at least one amplifier (47) comprised in the corrector.

21. The method according to the preceding claim, further including a step for combining predictions from the predictors (46) and gains at the output of the amplifiers (47).

22. The method according to any of the three preceding claims, including a step for calculating n correction signals ($S'_n$(t)) with each predictor (46).

23. The method according to any of the four preceding claims, including a step for grouping an estimator and a predictor pairwise in at least one Kalman filter.

24. The method according to any of the five preceding claims including a step for generating a compensation signal in opposite phase with the destabilization signal by the harmonic corrector (424).

25. The method according to any of the six preceding claims including the steps of:

- measuring destabilization of the line of sight (5, 5') with a deviation-measuring device (412);
- generating a compensation signal with a harmonic corrector (424);
- modifying the position of the line of sight and/or an image acquired by acquisition means (44), by a fine stabilization actuator (432).

26. The method according to any of the seven preceding claims, including a step for estimating the frequency with a slow phase-locked loop relatively to this frequency.

27. The method according to any of the eight preceding claims, including a step for stabilizing with the stabilization actuator (43) the line of sight (5) depending on the signal received from the harmonic corrector (424) which is a linear combination of the signals from the predictors.

**Patentansprüche**

1. System zur abgestimmten Stabilisierung einer Visierlinie einer optoelektronischen Vorrichtung (4), Folgendes umfassend:

   - Messmittel (41), die dazu geeignet sind, eine Destabilisierung (5, 5') der Visierlinie zu messen, wobei die Destabilisierung wenigstens eine periodische Frequenzkomponente ($\Omega_n$) enthält, die vorab bekannt und/oder zeitlich langsam veränderlich ist;
   - ein Korrekturglied (424), dass dazu geeignet ist, in Abhängigkeit von der gemessenen Destabilisierung ein Kompensationssignal zu erzeugen,
   wobei das Korrekturglied (424) folgendes umfasst:

      - wenigstens ein Schätzglied (45), dass dazu geeignet ist, Parameter einer Funktion zu schätzen, die die Destabilisierung repräsentiert,
      - wenigstens ein Prädiktionsglied (46), das dazu geeignet ist, die Prädiktion einer Verzögerung ($\Delta\theta_n$) zwischen der Kompensation und der Messung der Destabilisierung zu berücksichtigen,

   wobei das System außerdem Folgendes umfasst:

      - ein Stabilisierungsstellglied (43), das dazu geeignet ist, die Destabilisierung zu kompensieren,

   **dadurch gekennzeichnet, dass**
   das Korrekturglied harmonisch ist (424),
   jedes Schätzglied (45) wenigstens ein Filter enthält, das auf der jeweiligen Frequenz ($\Omega_n$) zentriert ist, die vorab bekannt und/oder zeitlich langsam veränderlich ist, und dies, um:

      jede periodische Komponente in wenigstens ein sinusförmiges Signal ($\hat{S}_n$ ($t_i$)) zu zerlegen, und
      für jedes sinusförmige Signal eine Amplitude ($\hat{A}_n$) und eine Phase ($\Phi_n$) zu schätzen.

2. System nach dem vorhergehenden Anspruch, bei dem das harmonische Korrekturglied (424) wenigstens einen Verstärker (47) umfasst, der dazu geeignet ist, am Ausgang wenigstens eines Prädiktionsglieds (46) eine Korrekturverstärkung zu erzeugen.

3. System nach dem vorhergehenden Anspruch, das außerdem Mittel umfasst, die dazu geeignet sind, eine Kombination von Prädiktionen der Prädiktionsglieder (46) und von Verstärkungen am Ausgang der Verstärker (47) auszuführen.

4. System nach einem der Ansprüche 2 bis 3, bei dem die Verstärker (47) dazu geeignet sind, eine Dämpfung zwischen der Kompensation und der Messung der Destabilisierung zu berücksichtigen.

5. System nach einem der Ansprüche 2 bis 3, bei dem die Verstärker (47) sich in einem Regelkreis befinden.

6. System nach einem der vorhergehenden Ansprüche, bei dem jedes Prädiktionsglied (46) dazu geeignet ist, n Korrektursignale ($S'_n$(t)) zu berechnen, was es gestattet, eine Gesamtverzögerung $\Delta\theta_n$ der Vorrichtung zu korrigieren.

7. System nach einem der vorhergehenden Ansprüche, bei dem wenigstens ein Kalmanfilter paarweise ein Schätzglied und ein Prädiktionsglied zusammenfasst.

8. System nach einem der vorhergehenden Ansprüche, bei dem das harmonische Korrekturglied (424) dazu geeignet ist, ein Kompensationssignal zu erzeugen, das zu dem Destabilisierungssignal eine entgegengesetzte Phase hat.

9. System nach einem der vorhergehenden Ansprüche, bei dem das Stabilisierungsstellglied (43) dazu geeignet ist, die Visierlinie (5) während einer Erfassung eines Bildes durch Erfassungsmittel (44) des Systems zu stabilisieren.

10. System nach Anspruch 9, bei dem das Stellglied (43) ein optomechanisches Stellglied (431) umfasst.

11. System nach einem der Ansprüche 9 bis 10, bei dem die Messmittel (41) einen Verhaltenssensor umfassen.

12. System nach den Ansprüchen 10 bis 11, bei dem das optomechanische Stellglied (431) mit dem Verhaltenssensor (411) derart fest verbunden ist, dass das System einen geschlossenen Trägheitsregelkreis bildet.

13. System nach Anspruch 9, bei dem das Stellglied (43) ein Stellglied zur Feinstabilisierung (432) umfasst.

14. System nach Anspruch 13, bei dem das Stellglied zur Feinstabilisierung (432) optomechanische Mittel zur Verschiebung der Visierlinie (5, 5') mit wenigstens einem Freiheitsgrad in Bezug auf den Verhaltenssensor (411) umfasst.

15. System nach Anspruch 14, bei dem die optomechanischen Mittel zur Verschiebung der Visierlinie (5, 5') Mittel zur Verschiebung einer Platte, eines Spiegels oder eines Prismas zur Feinstabilisierung der Visierlinie (5, 5') umfassen, wobei die Platte, der Spiegel oder das Prisma zwischen dem harmonischen Korrekturglied (424) und Erfassungsmitteln (44) angeordnet sind.

16. System nach Anspruch 14, bei dem das Stellglied zur Feinstabilisierung (432) Mittel zur elektronischen Feinstabilisierung umfasst.

17. System nach einem der Ansprüche 9 bis 10, bei dem die Messmittel (41) ein Abweichungsmessgerät (412) umfassen, das mit einem der Mittel zur Bilderfassung (44) verbunden ist.

18. System nach dem vorhergehenden Anspruch, bei dem das Abweichungsmessgerät (412) dazu geeignet ist, die Verschiebung einer Szene derart zu messen, dass das System einen geschlossenen Videoregelkreis bildet.

19. Verfahren zur abgestimmten Stabilisierung einer Visierlinie (5) einer optoelektronischen Vorrichtung (4), folgende Schritte umfassend:

- Messung einer Destabilisierung (5, 5') der Visierlinie durch Messmittel (41), wobei die Destabilisierung wenigstens eine periodische Frequenzkomponente ($\Omega_n$) enthält, die vorab bekannt und/oder zeitlich langsam veränderlich ist;
- Erzeugen eines Kompensationssignals in Abhängigkeit von der durch ein Korrekturglied (424) gemessenen Destabilisierung,
wobei das Erzeugen des Kompensationssignals folgende Schritte umfasst:

- Schätzen, durch wenigstens ein im Korrekturglied (424) enthaltenes Schätzglied (45), von Parametern einer Funktion, die die Destabilisierung repräsentiert,
- Berücksichtigen der Prädiktion einer Verzögerung ($\Delta\theta_n$) zwischen der Kompensation und der Messung der Destabilisierung, durch wenigstens ein Prädiktionsglied (46), das im Korrekturglied enthalten ist,

- wobei das Verfahren außerdem eine Kompensation der Destabilisierung durch ein Stabilisierungsstellglied (43) umfasst,

**dadurch gekennzeichnet, dass** es folgende Schritte umfasst:

- Filtern der Destabilisierung durch wenigstens ein Filter, das im Schätzglied (45) enthalten ist und das auf der jeweiligen vorab bekannten und/oder zeitlich langsam veränderlichen Frequenz ($\Omega_n$) zentriert ist,
- Zerlegen, durch das Schätzglied, jeder periodischen Komponente in wenigstens ein sinusförmiges Signal ($\hat{S}_n(t_i)$), und
- Schätzen, durch das Schätzglied, einer Amplitude ($\hat{A}_n$) und einer Phase ($\hat{\Phi}_n$) für jedes sinusförmige Signal.

20. Verfahren nach dem vorhergehenden Anspruch, das einen Schritt zum Erzeugen einer Korrekturverstärkung am Ausgang wenigstens eines Prädiktionsglieds (46) umfasst, und dies mittels eines Verstärkers (47), der im Korrekturglied enthalten ist.

21. Verfahren nach dem vorhergehenden Anspruch, das außerdem einen Schritt zur Kombination von Prädiktionen der Prädiktionsglieder (46) und von Verstärkungen am Ausgang der Verstärker (47) umfasst.

22. Verfahren nach einem der drei vorhergehenden Ansprüche, das einen Schritt zur Berechnung von n Korrektursignalen (S'n(t)) durch jedes Prädiktionsglied (46) umfasst.

23. Verfahren nach einem der vier vorhergehenden Ansprüche, das einen Schritt zur paarweisen Zusammenfassung eines Schätzglieds und eines Prädiktionsglieds in wenigstens einem Kalmanfilter umfasst.

24. Verfahren nach einem der fünf vorhergehenden Ansprüche, das einen Schritt zum Erzeugen eines Kompensationssignals durch das harmonische Korrekturglied (424) umfasst, wobei dieses zu dem Destabilisierungssignal eine entgegengesetzte Phase hat.

25. Verfahren nach einem der sechs vorhergehenden Ansprüche, das die folgenden Schritte umfasst:

   - Messen einer Destabilisierung der Visierlinie (5, 5') durch ein Abweichungsmessgerät (412);
   - Erzeugen eines Kompensationssignals durch ein harmonisches Korrekturglied (424);
   - Verändern der Position der Visierlinie und/oder eines Bildes, das durch Erfassungsmittel (44) erfasst wird, durch ein Stellglied zur Feinstabilisierung (432).

26. Verfahren nach einem der sieben vorhergehenden Ansprüche, das einen Schritt zum Schätzen der Frequenz mit einer im Vergleich zu dieser Frequenz langsamen Phasenregelschleife umfasst.

27. Verfahren nach einem der acht vorhergehenden Ansprüche, das einen Schritt zur Stabilisierung der Visierlinie (5) durch das Stabilisierungsstellglied (43) in Abhängigkeit von dem Signal umfasst, das vom harmonischen Korrekturglied (424) empfangen wird und das eine lineare Kombination der Signale ist, die von den Prädiktionsgliedern ausgegeben werden.

**FIG.1**

**FIG.8**

EP 1 845 403 B1

**(41)**
Mesures de la déstabilisation de la ligne de visée

**(412)**
Ecartomètre/ détection du mouvement image

**(411)**
Capteur d'attitude/ Capteur inertiel

**(42)**
Correcteurs

**(422)**
Correcteur écartométrique

**(423)**
Correcteur stabilisation fine

**(421)**
Correcteur optomécanique

**(42)**
Actionneurs

**(432)**
Actionneur de stabilisation fine

**(431)**
Actionneur optomécanique

Stabilisation fine (4c)

Bouclage inertiel (4a)

**(46)**
Déformation mécanique

**(45)**
Cible

**(44)**
Acquisition d'image

Bouclage vidéo Fermée (4b)

**(6)**

FIG.2

**FIG.3**

FIG.4a

(424) Correcteur Harmonique

Gain : $G_n$
Retard : $\Delta\theta_n$
Fréquences $\Omega_n$

(47) Gain
(47N) Gain $\alpha_N$
(471) Gain $\alpha_1$

(46) Prédicteur
(46N) Prédicteur $\Omega_N$
(461) Prédicteur $\Omega_1$

(45) Estimateur
(45N) Estimateur $\Omega_N$
(451) Estimateur $\Omega_1$

$S_n(t)$
$S_1(t)$
$S'(t)$

$V(t_i)$

(412) Ecartomètre/ détection du mouvement image

(432) Actionneur de stabilisation fine

$D^*(t)$
$G.S'(t)$
$V^*(t)$

(44) Acquisition d'image

(6)

Bouclage vidéo Fermée (4b)

Fréquences $\Omega_n$     Retard : $\Delta\theta_n$     Gain : $G_n$

(411)
Capteur d'attitude/
capteur inertiel

(424) Correcteur Harmonique

(45)
Estimateur

(46)
Prédicteur

(47) Gain

(45N)
Estimateur
$\Omega_N$

(46N)
Prédicteur
$\Omega_N$

(47N)
Gain
$\alpha_N$

(451)
Estimateur
$\Omega_1$

(461)
Prédicteur
$\Omega_1$

(471)
Gain
$\alpha_1$

$V(t_i)$

$D^*(t)$

$S'_{(t)}$

(46)
Déformations
mécaniques

(44)
Acquisition d'image

(6)

(432)
Actionneur de
stabilisation fine

$V^*(t)$

$G.S'(t)$

FIG.4b

EP 1 845 403 B1

Fréquences $\Omega_n$     Retard : $\Delta\theta_n$     Gain : $G_n$

**(411)**
Capteur d'attitude/
capteur inertiel

**(424)** Correcteur Harmonique

**(45)**
Estimateur

**(46)**
Prédicteur

**(47)** Gain

**(45N)**
Estimateur
$\Omega_N$

**(46N)**
Prédicteur
$\Omega_N$

**(47N)**
Gain
$\alpha_N$

$V(t_i)$

**(451)**
Estimateur
$\Omega_1$

**(461)**
Prédicteur
$\Omega_1$

**(471)**
Gain
$\alpha_1$

Bouclage inertiel (4a)

$S'_{(t)}$

**(46)**
Déformations
mécaniques

$D^*(t) = G.S'(t)$

**(44)**
Acquisition d'image

**(6)**

**(431)**
Actionneur
optomécanique

## FIG.4c

Vidéo

Reconstitution
du deplacement
de la vidéo $V(t_i)$

**(44) Génération de trames vidéo numérique à 1/T=100Hz**

Retard vidéo
Exp($-\delta t.s$)
+ Blocage trame
$(1-z^{-1})/s$

**(412) Mesure de la destabilisation par écartomètre**

**(4121) Corrélateur**

Retard 1 trame
$z^{-1}$

−

+

**(4122) Intégration $1/(1-z^{-1})$**

Ecart angulaire
entre trames :
$E(t_i)=V(t_i)-V(t_{i-1})$

Erreur
$V^*(t)=D^*(t)\cdot G(s)S(t)$
$=S^*(t)+B^*(t)$

Fréquence à
compenser $\Omega_n$

Filtre $F_n(z)$ passe
bande sur $\Omega_n$
largeur 2Hz

**(45) Estimateur**

**(432) Actionneur de Stabilisation fine**

+ −

Fonction transfert : G(s)
Atténuation : $G_{n'}$
Retard : $\Delta t_n$

Retard actionneur
fin $\Delta t_n$

Retard vidéo
temps calcul $\varepsilon$

Multiplicateur

$\hat{S}_n^2(t_i)$

Filtre passe bas 2Hz :
$F_0(z)$

Estimation
valeur
instantanée
$\hat{S}_n(t_i)$

$S'(t)=\alpha_n * S_n(t)$

Retard global
$\Delta\theta_n = \Delta t+\varepsilon$

2

$\hat{A}_n^2(t_i)$

Erreur de
déstabilisation de
la ligne de visée :
$D^*(t)$

**(47) Gain $\alpha_n$**

**(46) Prédicteur**

Générateur sinusoïdal à $\omega = 2\pi.\Omega_n$

Atténuation
actionneur fin
$G_n$

## FIG.5

Déstabilisation
avant correction
D*(t)

(432)
+
−

Déstabilisation avec
correction accordée
V*(t)=D*(t)-G(s)S'(t)

$G_n(s)=$
$G_n \cdot \exp(-s.\Delta t_n)$

(424)
$K_n(s) =$
$\alpha_n \exp(s\Delta\theta_n)F_n(s)$

(44+412)
$\exp(-s.\varepsilon)$

S'(t)          D(t)          G'_n(s)

## FIG.6

dB

$\Omega_n$

$1/(G'(s).K_n(s))$

0 dB

Log f
en Hz

H(s)

$1/(G_n \cdot \alpha_n)$

$F_n(s)$

## FIG.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5444509 A